# EUROPÄISCHE PATENTSCHRIFT

(11) **EP 2 031 296 B1**
(45) Veröffentlichungstag und Bekanntmachung des Hinweises auf die Patenterteilung: **16.04.2014**
(21) Anmeldenummer: 08008929.5
(22) Anmeldetag: 14.05.2008
(51) Int. Cl.: F21S 8/00, F21V 5/04

(54) **Beleuchtungsvorrichtung**
Illumination device
Dispositif d'éclairage

(30) Priorität: 28.08.2007 DE 102007040573
(43) Veröffentlichungstag der Anmeldung: 04.03.2009
(73) Patentinhaber: Bartenbach Holding GmbH, 6071 Aldrans (AT)
(72) Erfinder: Bartenbach, Christian, 6071 Aldrans (AT)
(74) Vertreter: Thoma, Michael

(56) Entgegenhaltungen:
- EP-A- 1 495 910
- EP-A- 1 496 380
- EP-A- 1 630 473
- DE-U1-202010 002 593
- US-A- 3 488 485
- US-B1- 7 222 995

## Beschreibung

Die vorliegende Erfindung betrifft eine Beleuchtungsvorrichtung zur Beleuchtung von Räumen, mit zumindest einem Leuchtmittel vorzugsweise in Form einer LED, sowie einer vorzugsweise paneelförmigen Verblendung, die eine dem Leuchtmittel zugeordnete Lichtaustrittsöffnung aufweist, wobei dem Leuchtmittel eine Fokussieroptik mit einer zwischen dem Leuchtmittel und dem Paneel angeordneten Linse zur Bündelung des abgegebenen Lichts auf einen im Bereich der Lichtaustrittöffnung liegenden Brennpunkt zugeordnet ist.

Eine solche Beleuchtungsvorrichtung ist beispielsweise aus der EP 1495910 A2 bekannt.

In jüngerer Zeit wurde vorgeschlagen, an Deckenpaneelen, mittels derer Gebäudedecken verkleidet werden, Leuchtenfelder mit einer Vielzahl von Leuchten anzuordnen, um die Decke sozusagen sternenhimmelartig zu beleuchten. Hierzu weist das jeweilige Deckenpaneel eine Vielzahl von Lichtaustrittsöffnungen auf, durch die hindurch das von den Leuchten abgegebene Licht in den Raum austreten kann.

Bei derartigen Beleuchtungsvorrichtungen ist es bislang jedoch noch nicht optimal gelungen, die verschiedenen Anforderungen an ein hochwertiges Raumbeleuchtungskonzept zu erfüllen. Einerseits soll die Beleuchtungsvorrichtung zusammen mit den die Raumwand bzw. -decke verkleidenden Paneelen eine nur geringe Bauhöhe aufweisen, um die Raumhöhe bzw. die Raumgröße nicht über die Maßen zu beeinträchtigen. Andererseits soll eine zumindest bereichsweise gleichmäßige Raumausleuchtung ohne Blendwirkung erreicht werden. Die hierfür erforderlichen Leuchtstärken führen bei bekannten Lösungen oftmals zu einer Blendwirkung. Zudem ist die Lichtabgabe oftmals inneffizient, so dass eine nur geringe Energieeffizienz erreicht wird.

Hier versucht die vorliegende Erfindung Abhilfe zu schaffen. Ihr liegt die Aufgabe zugrunde, eine verbesserte Beleuchtungsvorrichtung der genannten Art zu schaffen, die Nachteile des Standes der Technik vermeidet und letzteren in vorteilhafter Weise weiterbildet. Vorzugsweise soll eine blendfreie, zumindest bereichsweise gleichmäßige Raumausleuchtung bei hoher Energieeffizienz und ästhetischem Erscheinungsbild erreicht werden.

Diese Aufgabe wird erfindungsgemäß durch eine Beleuchtungsvorrichtung nach Anspruch 1 gelöst. Bevorzugte Ausgestaltungen der Erfindung sind Gegenstand der abhängigen Ansprüche.

Es wird also vorgeschlagen, die zumindest eine Lichtaustrittsöffnung in der vorzugsweise paneelförmigen Verblendung unabhängig von der Größe der Leuchte soweit zu verkleinern, dass eine Blendwirkung durch das hinter dem Paneel versteckte Leuchtmittel mehr oder minder ausgeschlossen ist. Um dennoch eine effiziente Beleuchtung zu erreichen und die Leuchtmittel nicht durch das Paneel mangels großflächiger Lichtaustrittsöffnungen größtenteils abzuschatten, wird der von den Leuchtmitteln abgegebene Lichtstrom durch die an sich zu kleinen Lichtaustrittsöffnungen in dem Paneel hindurch fokussiert. Erfindungsgemäß ist vorgesehen, dass das Leuchtmittel von der Lichtaustrittsöffnung der Verblendung beabstandet ist und dem Leuchtmittel eine Fokussieroptik zur Bündelung des abgegebenen Lichts auf einen im Bereich der Lichtaustrittsöffnung liegenden Brennpunkt zugeordnet ist. Der von einer Leuchte abgegebene Lichtstrom verjüngt sich durch die Fokussieroptik bis zu der jeweiligen Lichtaustrittsöffnung des Paneels hin, während er sich auf der gegenüberliegenden, sichtbaren Raumseite des Paneels wieder aufweitet, um den jeweiligen Raumbereich gleichmäßig auszuleuchten. Die Fokussieroptik ist also derart ausgebildet, dass ein doppelkegelartiger Strahlengang entsteht, dessen Einschnürungspunkt im Bereich der Lichtaustrittsöffnung des Paneels liegt.

Insbesondere kann dabei in vorteilhafter Weise die Verblendung als Wand- und/oder Deckenpaneel zur Verblendung einer Raumwand und/oder -decke, vorzugsweise als Holz- und oder Verbundplattenpaneel, ausgebildet sein, in dem die zumindest eine Lichtaustrittsöffnung vorgesehen ist. Das Wand- und/oder Deckenpaneel bildet als vorteilhafterweise selbst eine Blende mit Lichtdurchtrittsöffnung, so daß Paneel und Leuchte eine modulare Baugruppe bilden können. Vorteilhafterweise kann dabei ein ganzes Leuchtenfeld umfassend mehrere, vorzugsweise matrizenartig angeordnete Leuchtmittel vorzugsweise in Form von LEDs vorgesehen ist, wobei jedem Leuchtmittel eine Lichtaustrittsöffnung in dem Paneel sowie eine Fokussieroptik zur Bündelung des abgegebenen Lichts auf einen im Bereich der jeweils zugeordneten Lichtaustrittsöffnung liegenden Brennpunkt zugeordnet sind.

In Weiterbildung der Erfindung können die Lichtaustrittsöffnungen einen deutlich kleineren Durchmesser besitzen als die ihnen zugeordneten Leuchten bzw. deren Fokussieroptik. Durch diesen im Vergleich zu den Leuchten bzw. deren Fokussieroptik deutlich kleineren Durchmesser der Lichtaustrittsöffnungen werden für das Auge die hinter dem Paneel befindlichen Leuchten sozusagen unsichtbar bzw. werden sie sichtbar im wesentlichen nur noch dann, wenn die Blickachse einigermaßen mit der Lochachse der Lichtaustrittsöffnungen fluchtet, was jedoch insbesondere bei Deckenpaneelen bei normalem, schräg auf die Decke gerichtetem Blick regelmäßig nicht vorkommt.

Je nach Ausbildung der verwendeten Leuchte bzw. der dem jeweiligen Leuchtmittel zugeordneten Fokussieroptik kann der Durchmesser der Lichtaustrittsöffnungen nur einen Bruchteil des Leuchtmittel- bzw. Fokussieroptikdurchmessers betragen. Wird beispielsweise als Fokussieroptik eine Linse und/oder ein Reflektor verwendet, kann der Durchmesser der Lichtaustrittsöffnungen weniger als ²/₃, vorzugsweise weniger als die Hälfte des Durchmessers der Linse und/oder des Reflektors betragen. In vorteilhafter Weiterbildung der Erfindung kann der Durchmesser der Lichtaustrittsöffnungen in dem Paneel in einem Bereich von nur 3 bis 20 mm liegen, vorzugsweise nur zwischen 6 und 10 mm betragen.

Um eine energieeffiziente Raumausleuchtung zu erreichen und eine übermäßige Wärmeentwicklung im Bereich des Deckenpaneels und/oder darüber zu vermeiden, ist vorteilhafterweise die Fokussieroptik derart ausgebildet, dass der gesamte Lichtstrom der Leuchtmittel durch die Lichtaustrittsöffnungen in dem Paneel hindurch fokussiert wird. Der gesamte Strahlengang einer Leuchte wird derart abgelenkt, dass er vollständig durch die zugeordnete Lichtaustrittsöffnung hindurchgeführt wird. Dementsprechend kann mit Leuchtmitteln niedrigerer Leuchtkraft gearbeitet und dennoch eine ausreichende Raumausleuchtung erreicht werden. Insbesondere werden als Leuchtmittel punktförmige Lichtquellen verwendet, die das Licht vollständig in einen Halbraum abgeben. Insbesondere werden vorteilhafterweise als Leuchtmittel LEDs verwendet, wobei je nach Lichtkonzept für den jeweiligen Raum LEDs unterschiedlicher Lichtfarbe Verwendung finden können.

Erfindungsgemäß umfasst die Fokussieroptik zwischen den Leuchtmitteln und dem Paneel angeordnete Linsen, die den von den Leuchtmitteln abgegebenen Lichtstrom auf einen in der jeweiligen Lichtaustrittsöffnung liegenden Brennpunkt fokussieren.

Die verwendeten Linsen können je nach Einbausituation, zur Verfügung stehender Bauhöhe und Ausbildung der Leuchten unterschiedliche Formen besitzen. Gemäß einer vorteilhaften Ausführung der Erfindung kann die einem Leuchtmittel zugeordnete Linse eine Lichtaustrittsseite besitzen, die in gegensinnig gewölbte Grenzflächenbereiche untergliedert ist. Vorteilhafterweise kann die Linse in einem zentralen Lichtaustrittsbereich eine konvex geformte Grenzfläche aufweisen, die von einer ringwulstartig geformten Grenzfläche umgeben ist, die ggü. dem zentralen Lichtaustrittsbereich stirnseitig vorspringt. Die genannte äußere, ringwulstartig konvex geformte Grenzfläche kann dabei unmittelbar an die zentrale, konvex geformte Grenzfläche angrenzen und letztere ringförmig umschließen. Der Übergang zwischen den beiden Grenzflächen kann eine ringförmige Kante in der Kontur der Lichtaustrittsseite der Linse bilden oder gerundet sein.

Alternativ oder zusätzlich kann die Linse auch auf ihrer Lichteintrittsseite unterschiedlich geformte Grenzflächen aufweisen. In Weiterbildung der Erfindung besitzt die Linse in einem zentralen Lichteintrittsbereich einen zur Leuchte hin konvex gekrümmten Grenzflächenabschnitt, der das zentral abgegebene Licht einfängt und parallel auf die Lichtaustrittsfläche der Linse richtet. Zum Einfangen des mehr seitlich abgegebenen Lichtstroms kann die Linse weiterhin eine vorzugsweise kegel- oder trichterartig geformte äußere Lichteintrittsfläche aufweisen, die das Licht auf eine seitliche Außenkontur der Linse richtet. Die besagte Außenkontur der Linse ist vorteilhafterweise reflektierend, insbesondere total reflektierend ausgebildet, so dass der Lichtstrom in den Linsenkörper zurück reflektiert wird. Vorteilhafterweise ist die total reflektierende Außenkontur derart geformt, dass der Lichtstrom auf die Lichtaustrittsseite der Linse gelenkt wird, insbesondere auf den vorgenannten äußeren, konkav geformten Grenzflächenbereich der Lichtaustrittsseite der Linse.

Je nach verwendetem Leuchtmittel kann die Linse verschiedene geometrische Abmessungen besitzen. Bei Verwendung einer an sich üblichen LED kann die Linse einen Maximaldurchmesser von 15 bis 25 mm, vorzugsweise im Bereich von 20 bis 25 mm, aufweisen. Der Maximaldurchmesser liegt dabei vorteilhafterweise im Bereich der Lichtaustrittsseite der Linse.

Vorteilhafterweise ist die Linse sehr kurzbauend ausgebildet. Sie kann eine Länge im Bereich von 10 bis 25 mm, vorzugsweise 15 bis 20 mm, aufweisen.

Zusätzlich kann die Fokussieroptik auch einen Reflektor aufweisen, der die jeweilige Leuchtmittel auf der von dem Paneel abgewandten Seite umgibt. Vorteilhafterweise ist die Reflektorfläche des Reflektors derart geformt, dass in der vorgenannten Weise der vom Reflektor eingefangene Lichtstrom auf einen Brennpunkt im Bereich der Lichtaustrittsöffnung des Paneels fokussiert wird.

Um eine einfache Montage zu ermöglichen, können die Leuchten bzw. die Fokussieroptik mit dem Paneel zu einer Montagebaugruppe verbunden sein. Alternativ können die Leuchtmittel und die Fokussieroptik jedoch auch unabhängig von dem Paneel an der Wand bzw. Decke oder einem weiteren Träger montiert sein. Dies kann insbesondere dann vorteilhaft sein, wenn die Leuchtmittel einerseits und die Lichtaustrittsöffnungen andererseits in miteinander deckungsgleichen, insbesondere regelmäßigen Rastern angeordnet sind, so dass ein deckungsgleiches Aufsetzen des Paneels in einfacher Weise ermöglicht wird.

In vorteilhafter Weiterbildung der Erfindung können die Leuchten mit der Fokussieroptik auf einem Leuchtenträger vorzugsweise in Form einer Platine befestigt sein. Die besagte Platine kann die Steuerungs- und/oder Leistungselektronik zur Ansteuerung und zum Betreiben der Leuchten aufweisen.

Die Erfindung wird nachfolgend anhand bevorzugter Ausführungsbeispiele und zugehöriger Zeichnungen näher erläutert. In den Zeichnungen zeigen:
- Fig. 1:: eine schematische Schnittdarstellung einer Beleuchtungsvorrichtung nach einer vorteilhaften Ausführung der Erfindung, bei der die Fokussieroptik eine speziell geformte Linse aufweist,
- Fig. 2:: eine vergrößerte Darstellung der Linse aus Fig. 1 und des davon bewirkten Strahlengangs, und
- Fig. 3:: eine schematische Schnittansicht ähnlich Fig. 1 einer weiteren vorteilhaften Ausführung der Erfindung, bei der die Fokussieroptik einen Reflektor aufweist.

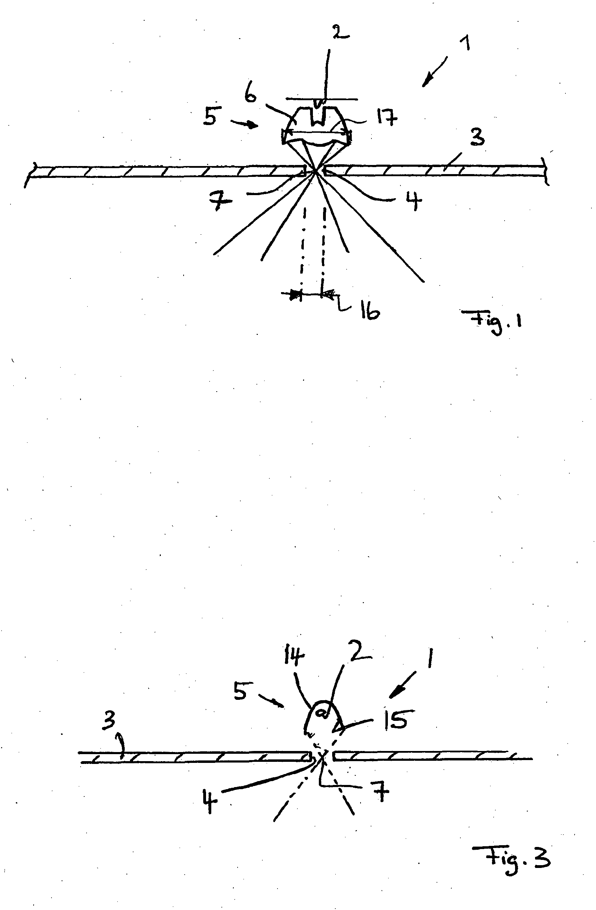

Die in Figur 1 schematisch gezeichnete Beleuchtungsvorrichtung 1 umfasst eine Vielzahl von Leuchten umfassend Leuchtmittel 2 vorteilhafterweise in Form von LEDs, die vorzugsweise in einem regelmäßigen Raster voneinander beabstandet angeordnet sind. In Figur 1 ist indes nur eine Leuchte mit nur einem Leuchtmittel 2 gezeigt, dessen Licht vollständig in einen gemäß Figur 1 nach unten gerichteten Halbraum abgestrahlt wird.

Dem Leuchtmittel 2 zugeordnet ist ein Paneel 3, das vorteilhafterweise in Form eines Wand- und/oder Deckenverkleidungspaneels ausgebildet ist und nach Art einer vorgeblendeten Wandverkleidung bzw. einer abgehängten Deckenverkleidung montiert werden kann. Das Paneel 3 kann dabei in Form einer ebenen Platte, beispielsweise einer Holzplatte aber auch einer Verbundbauplatte, ausgebildet sein.

Das Paneel 3 weist dabei Lichtaustrittsöffnungen 4 auf, die den Leuchten zugeordnet sind und in einem der Anordnung der Leuchten entsprechenden Raster angeordnet sind.

Wie Figur 1 zeigt, sind die Leuchtmittel 2 auf der nicht sichtbaren Rückseite des Paneels 3 von den Lichtaustrittsöffnungen 4 deutlich beabstandet. Zwischen dem in Figur 1 gezeichneten Leuchtmittel 2 und dem Paneel 3 bzw. dessen Lichtaustrittsöffnung 4 ist gemäß Figur 1 eine eine Fokussieroptik 5 bildende Linse 6 angeordnet, die das von dem Leuchtmittel 2 in den Halbraum abgestrahlte Licht bündelt und durch die an sich zu kleine Lichtaustrittsöffnung 4 hindurchleitet. Insbesondere nimmt die Linse 6 den vom Leuchtmittel 2 abgegebenen Lichtstrom vollständig auf und gibt ihn vollständig wieder ab, insbesondere bündelt die Linse 6 den vom Leuchtmittel 2 abgegebenen Lichtstrom auf einen Brennpunkt 7, der in der zugehörigen Lichtaustrittsöffnung 4 des Paneels 3 liegt, vgl. Figur 1.

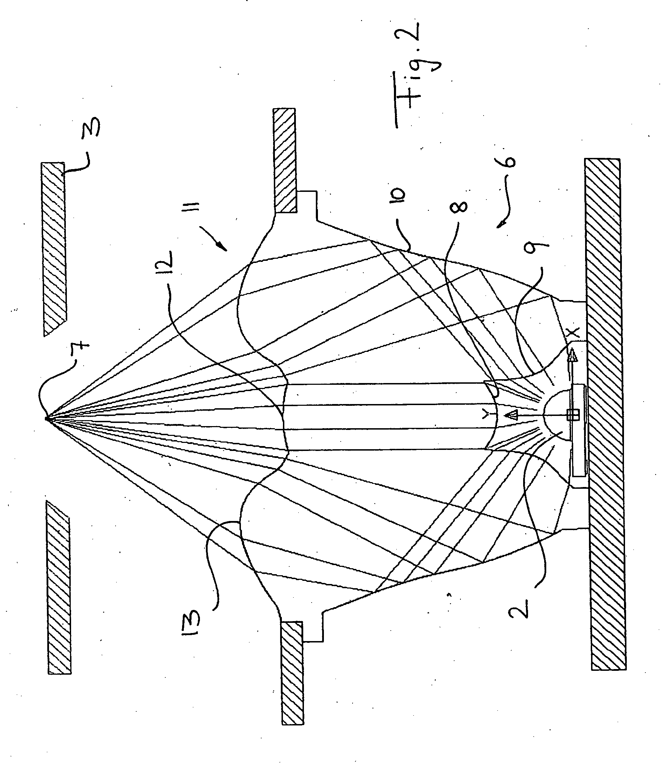

Die Linse 6 besitzt dabei vorteilhafterweise die in Figur 2 gezeigte Form. Auf der Lichteintrittsseite besitzt die Linse 6 eine - grob gesprochen - sackloch- bzw. senkenförmige Lichteintrittsausnehmung, mit der die Linse 6 über das Leuchtmittel 2 gestülpt ist bzw. auf dieses aufgesetzt ist, vgl. Figur 2. Die genannte Lichteintrittsausnehmung umfasst dabei in einem zentralen, stirnseitigen Bereich eine zum Leuchtmittel 2 hin konvex gewölbte Eintrittsgrenzfläche 8, die den zentral nach oben abgestrahlten Lichtkegel einfängt und im Linsenkörper zunächst parallel nach oben richtet. Die Grenzfläche wird hierbei durch den Übergang von einem ersten Medium, beispielsweise Luft mit einem Brechungsindex von 1,0, in ein zweites Medium mit einem hiervon verschiedenen Brechungsindex, beispielsweise PMMA mit einem Brechungsindex von 1,5, gebildet. Seitlich wird der vorgenannte Lichteintrittsraum von einer kegel- bzw. trichterförmigen Grenzfläche 9 begrenzt, die sich mit im Schnitt betrachtet konvex gebogenen Flanken zum Leuchtmittel hin erweitert und die mehr seitlich abgegebenen Lichtstrahlen bricht und auf die Außenseite 10 der Linse 6 richtet, vgl. Figur 2.

Die besagte Außenfläche 10 ist hierbei vorteilhafterweise total reflektierend ausgebildet, so dass die auf die Außenseite 10 gelangenden Lichtstrahlen reflektiert werden, und zwar zu der Lichtaustrittsseite 11 der Linse 6.

Die besagte Lichtaustrittsseite 11 der Linse 6 ist dabei im wesentlichen in zwei unterschiedlich geformte Grenzflächenabschnitte untergliedert. Eine erste, zentrale Grenzfläche 12 ist leicht konvex gewölbt. Auf diese zentrale Grenzfläche 12 gelangen die Lichtstrahlen, die über die zentrale Eintrittsgrenzfläche 8 in den Linsenkörper eingetreten und parallel gerichtet gemäß Figur 2 nach oben gestrahlt wurden. Die genannte zentrale, leicht konvexe Grenzfläche 12 wird auf der Lichtaustrittsseite 11 von einer ringwulstförmigen, konvexen zweiten Grenzfläche 13 ergänzt, die die von der Außenseite 10 der Linse 6 her kommenden Lichtstrahlen ablenkt.

Die Grenzflächen 8, 9, 12 und 13 sowie die total reflektierende Außenseite 10 sind dabei hinsichtlich ihrer Formgebung derart aufeinander abgestimmt, dass der gesamte vom Leuchtmittel 2 abgegebene Lichtstrom auf den Brennpunkt 7 fokussiert wird, wobei die Linse 6 derart angeordnet ist, dass dieser Brennpunkt 7 in der Lichtaustrittsöffnung 4 liegt, vgl. Fig. 1 und Fig. 2.

Eine nicht beanspruchte Ausführung zeigt Figur 3. Dabei kann die Fokussieroptik 5 auch einen Reflektor 14 aufweisen, dessen Reflektionsfläche 15 das Leuchtmittel 2 umgibt und derart geformt ist, dass der von der Leuchte abgegebene Lichtstrom auf den in der Lichtaustrittsöffnung 4 liegenden Brennpunkt 7 fokussiert wird. Dabei kann ein solcher Reflektor 14 auch mit der vorgenannten Linse 6 kombiniert werden, um die gewünschte Fokussierung durch die Lichtaustrittsöffnung 4 hindurch zu erreichen.

## Patentansprüche

1. Beleuchtungsvorrichtung zur Beleuchtung von Räumen, mit zumindest einem Leuchtmittel (2) vorzugsweise in Form einer LED, sowie einer Verblendung in Form eines Paneels (3), die eine dem Leuchtmittel (2) zugeordnete Lichtaustrittsöffnung (4) aufweist, wobei dem Leuchtmittel (2) eine Fokussieroptik (5) mit einer zwischen dem Leuchtmittel (2) und dem Paneel (3) angeordnete Linse (6) zur Bündelung des abgegebenen Lichts auf einen in der Lichtaustrittsöffnung (4) liegenden Brennpunkt (7) zugeordnet ist, **dadurch gekennzeichnet, dass** das Leuchtmittel (2) und die Fokussieroptik (5) auf einer nicht sichtbaren Rückseite des Paneels (3) von der Lichtaustrittsöffnung (4) beabstandet angeordnet sind.

2. Beleuchtungsvorrichtung nach Anspruch 1, wobei die Verblendung als Wand- und/oder Deckenpaneel (3) zur Verblendung einer Raumwand und/oder - decke, vorzugsweise als Holz- und oder Verbundplattenpaneel, ausgebildet ist, in dem die zumindest eine Lichtaustrittsöffnung (4) vorgesehen ist.

3. Beleuchtungsvorrichtung nach einem der vorhergehenden Ansprüche, wobei ein Leuchtmittelfeld umfassend matrizenartig angeordnete Leuchtmittel (2) vorzugsweise in Form von LEDs vorgesehen ist, wobei jedem Leuchtmittel (2) eine Lichtaustrittsöffnung (4) in der Verblendung sowie eine Fokussieroptik (5) zur Bündelung des abgegebenen Lichts auf einen im Bereich der jeweils zugeordneten Lichtaustrittsöffnung (4) liegenden Brennpunkt (7) zugeordnet sind.

4. Beleuchtungsvorrichtung nach einem der vorhergehenden Ansprüche, wobei die Lichtaustrittsöffnungen (4) einen kleineren Durchmesser (16) besitzen als ihnen zugeordnete Leuchtmittel (2) und/oder deren Fokussieroptik (5).

5. Beleuchtungsvorrichtung nach einem der vorhergehenden Ansprüche, wobei die Lichtaustrittsöffnungen (4) einen Durchmesser (16) zwischen 3 mm und 20 mm, vorzugsweise zwischen 6 mm und 10 mm, aufweisen.

6. Beleuchtungsvorrichtung nach einem der vorhergehenden Ansprüche, wobei die Fokussieroptik (5) derart ausgebildet ist, dass der gesamte Lichtstrom der Leuchtmittel (2) durch die jeweilige Lichtaustrittsöffnung (4) hindurch fokussiert wird.

7. Beleuchtungsvorrichtung nach einem der vorhergehenden Ansprüche, wobei die Linsen (6) jeweils in einem zentralen Lichtaustrittsbereich eine konvex geformte Grenzfläche (12) aufweisen, die von einer konkav geformten Grenzfläche (13) umgeben ist.

8. Beleuchtungsvorrichtung nach einem der vorhergehenden Ansprüche, wobei die Linsen (6) eine sacklochartige Lichteintrittsausnehmung aufweisen, mit der die Linsen (6) auf die und/oder über die jeweilige Leuchtmittel (2) setzbar sind.

9. Beleuchtungsvorrichtung nach einem der drei vorhergehenden Ansprüche, wobei die Linsen (6) jeweils in einem zentralen Lichteintrittsbereich eine zur Leuchtmittel (2) hin konvex gekrümmte Grenzfläche (8) aufweist, die das Licht parallel auf einen zentralen Lichtaustrittsbereich der Linse (6) richtet, und/oder eine kegelförmig geformte äußere Lichteintrittsfläche (9) aufweist, die das Licht auf eine total reflektierende Außenkontur (10) der Linse (6) zur Reflektion des Lichts auf die Lichtaustrittsfläche der Linse (6) wirft.

10. Beleuchtungsvorrichtung nach einem der vorhergehenden Ansprüche, wobei die Linsen (6) einen Durchmesser (17) von 15 mm bis 30 mm, vorzugsweise 20 mm bis 25 mm, aufweisen.

11. Beleuchtungsvorrichtung nach einem der vorhergehenden Ansprüche, wobei die Linsen (6) eine Länge (17) von 10 mm bis 25 mm, vorzugsweise 15 mm bis 20 mm, aufweisen.

12. Beleuchtungsvorrichtung nach einem der vorhergehenden Ansprüche, wobei die Fokussieroptik (5) Reflektoren (14) aufweist, die jeweils zumindest ein Leuchtmittel (2) auf der dem Paneel (3) abgewandten Seite umgeben.

13. Beleuchtungsvorrichtung nach einem der vorhergehenden Ansprüche, wobei die Leuchtmittel (2) und die Fokussieroptik (5) mit dem Paneel (3) zu einer vormontierbaren Baugruppe verbunden sind und/oder die Leuchtmittel (2) mit der Fokussieroptik (5) auf einem Leuchtmittelträger in Form einer Platine befestigt sind.

14. Beleuchtungsvorrichtung nach einem der vorhergehenden Ansprüche, wobei die Linsen (6) jeweils ihren Maximaldurchmesser im Bereich der Lichtaustrittsseite der Linse (6) besitzen.

15. Beleuchtungsvorrichtung nach einem der vorhergehenden Ansprüche, wobei die Linsen (6) jeweils eine, in gegensinnig gewölbte Grenzflächenbereiche untergliederte Lichtaustrittsfläche besitzen.

## Claims

1. An illumination apparatus for illuminating rooms, having at least one illuminant (2), preferably in the form of an LED, as well as a facing in the form of a panel (3) which has a light outlet opening (4) associated with the illuminant (2), wherein a focusing optics (5) having a lens (6) arranged between the illuminant (2) and the panel (3) is associated with the illuminant (2) for bundling the emitted light onto a focal point (7) disposed in the light outlet opening (4), **characterised in that** the illuminant (2) and the focusing optics (5) are arranged spaced apart from the light outlet opening (4) on a non-visible rear side of the panel (3).

2. An illumination apparatus in accordance with claim 1, wherein the facing is configured as a wall panel and/or ceiling panel for facing a room wall and/or a room ceiling, preferably as a wooden panel (3) or composite board panel, in which the at least one light outlet opening (4) is provided.

3. An illumination apparatus in accordance with one of the preceding claims, wherein an illuminant field comprising illuminants (2), preferably in the form of LEDs, arranged in matrix-like form, is provided wherein a light outlet opening (4) in the facing as well as a focusing optics (5) for bundling the emitted light onto a focal point (7) disposed in the region of the respectively associated light outlet opening (4) are associated with each illuminant (2).

4. An illumination apparatus in accordance with one of the preceding claims, wherein the light outlet openings (4) have a smaller diameter (16) than illuminants (2) associated with them and/or their focusing optics (5).

5. An illumination apparatus in accordance with one of the preceding claims, wherein the light outlet openings (4) have a diameter (16) between 3 mm and 20 mm, preferably between 6 mm and 10 mm.

6. An illumination apparatus in accordance with one of the preceding claims, wherein the focusing optics (5) is configured such that the total light luminous flux of the illuminants (2) is focused through the respective light outlet opening (4).

7. An illumination apparatus in accordance with one of the preceding claims, wherein the lenses (6) each have a convexly shaped boundary surface (12) at a central light outlet region, said convexly shaped boundary surface being surrounded by a concavely shaped boundary surface (13).

8. An illumination apparatus in accordance with one of the preceding claims, wherein the lenses (6) have a light inlet cut-out of the type of a blind hole with which the lenses (6) can be placed onto and/or over the respective illuminants (2).

9. An illumination apparatus in accordance with one of the three preceding claims, wherein the lenses (6) each have a boundary surface (8) convexly curved with respect to the illuminants (2) in a central light inlet region, the convexly curved boundary surface directing the light in parallel to a central light outlet region of the lens (6); and/or have a conically shaped outer light inlet surface (9) which casts the light onto a totally reflective outer contour (10) of the lens (6) for reflection of the light onto the light outlet surface of the lens (6).

10. An illumination apparatus in accordance with one of the preceding claims, wherein the lenses (6) have a diameter (17) of 15 mm to 30 mm, preferably from 20 mm to 25 m.

11. An illumination apparatus in accordance with one of the preceding claims, wherein the lenses (6) have a length (17) of 10 mm to 25 mm, preferably from 15 mm to 20 m.

12. An illumination apparatus in accordance with one of the preceding claims, wherein the focusing optics (5) has reflectors (14) which each surround at least one illuminant (2) on the side remote from the panel (3).

13. An illumination apparatus in accordance with one of the preceding claims, wherein the illuminants (2) and the focusing optics (5) are connected with the panel (3) to form an assembly which can be preassembled; and/or the illuminants (2) are fastened with the focusing optics (5) to an illuminant carrier in the form of a circuit board.

14. An illumination apparatus in accordance with one of the preceding claims, wherein the lenses (6) each have their maximum diameter in the region of the light outlet side of the lens (6).

15. An illumination apparatus in accordance with one of the preceding claims, wherein the lenses (6) each have a light outlet surface subdivided into boundary surface regions arched in opposite senses.

## Revendications

1. Dispositif d'éclairage destiné à l'éclairage de pièces, comprenant au moins un moyen d'éclairage (2) de préférence sous forme d'une LED, ainsi qu'un revêtement sous forme d'un panneau (3) qui présente un orifice de sortie de la lumière (4) affecté au moyen d'éclairage (2), une optique de focalisation (5) étant affectée au moyen d'éclairage (2), l'optique de focalisation comprenant une lentille (6) disposée entre le moyen d'éclairage (2) et le panneau (3), destinée à concentrer la lumière émise sur un foyer (7) se trouvant dans l'orifice de sortie de la lumière (4), **caractérisé en ce que** le moyen d'éclairage (2) et l'optique de focalisation (5) sont disposés espacés de l'orifice de sortie de la lumière (4) sur une face arrière non visible du panneau (3).

2. Dispositif d'éclairage selon la revendication 1, le revêtement étant réalisé en tant que panneau mural et/ou de plafond (3) pour revêtir un mur et/ou un plafond d'une pièce, de préférence en tant que panneau en bois ou panneau composite, dans lequel se trouve l'au moins un orifice de sortie de la lumière (4).

3. Dispositif d'éclairage selon l'une des revendications précédentes, un champ de moyens d'éclairage comprenant des moyens d'éclairage (2) disposés à la manière d'une matrice de préférence sous forme de LED étant prévu, un orifice de sortie de la lumière (4) dans le revêtement ainsi qu'une optique de focalisation (5) destinée à concentrer la lumière émise sur un foyer (7) se trouvant dans la zone de l'orifice de sortie de la lumière (4) respectivement correspondante, étant affectées à chaque moyen d'éclairage (2).

4. Dispositif d'éclairage selon l'une des revendications précédentes, les orifices de sortie de la lumière (4) possédant un diamètre (16) inférieur à des moyens d'éclairage (2) et/ou leur optique de focalisation (5) leur étant affectés.

5. Dispositif d'éclairage selon l'une des revendications précédentes, les orifices de sortie de la lumière (4) présentant un diamètre (16) entre 3 mm et 20 mm, de préférence entre 6 mm et 10 mm.

6. Dispositif d'éclairage selon l'une des revendications précédentes, l'optique de focalisation (5) étant réalisée de telle manière que la totalité du flux lumineux des moyens d'éclairage (2) est focalisée à travers l'orifice de sortie de la lumière (4) respectif.

7. Dispositif d'éclairage selon l'une des revendications précédentes, les lentilles (6) présentant respectivement dans une zone centrale de sortie de la lumière une surface limite (12) de forme convexe, qui est entourée d'une surface limite (13) de forme concave.

8. Dispositif d'éclairage selon l'une des revendications précédentes, les lentilles (6) présentant un évidement d'entrée de la lumière de type trou borgne, avec lequel les lentilles (6) peuvent être posées sur les et/ou au-dessus des moyens d'éclairage (2) respectifs.

9. Dispositif d'éclairage selon l'une des trois revendications précédentes, les lentilles (6) présentant respectivement dans une zone centrale d'entrée de la lumière une surface limite (8) courbée de manière convexe vers le moyen d'éclairage (2), qui dirige la lumière parallèlement sur une zone centrale de sortie de la lumière de la lentille (6), et/ou qui présente une surface d'entrée de la lumière (9) extérieure formée de manière conique qui projette la lumière sur un contour extérieur (10) entièrement réfléchissant de la lentille (6) pour la réflexion de la lumière vers la surface de sortie de la lumière de la lentille (6).

10. Dispositif d'éclairage selon l'une des revendications précédentes, les lentilles (6) présentant un diamètre (17) de 15 mm à 30 mm, de préférence de 20 mm à 25 mm.

11. Dispositif d'éclairage selon l'une des revendications précédentes, les lentilles (6) présentant une longueur (17) de 10 mm à 25 mm, de préférence de 15 mm à 20 mm.

12. Dispositif d'éclairage selon l'une des revendications précédentes, l'optique de focalisation (5) présentant des réflecteurs (14) qui entourent respectivement au moins un moyen d'éclairage (2) sur le côté opposé au panneau (3).

13. Dispositif d'éclairage selon l'une des revendications précédentes, les moyens d'éclairage (2) et l'optique de focalisation (5) étant reliés au panneau (3) en un ensemble pouvant être prémonté et/ou les moyens d'éclairage (2) étant fixés avec l'optique de focalisation (5) sur un support de moyen d'éclairage sous forme d'une platine.

14. Dispositif d'éclairage selon l'une des revendications précédentes, les lentilles (6) possédant respectivement leur diamètre maximal dans la zone du côté sortie de la lumière de la lentille (6).

15. Dispositif d'éclairage selon l'une des revendications précédentes, les lentilles (6) possédant respectivement une surface de sortie de la lumière divisée en zones de surfaces limites bombées dans des directions opposées.
